**Europäisches Patentamt**

**European Patent Office**

**Office européen des brevets**

(19)

(11) Publication number: **0 005 991**
**A2**

# EUROPEAN PATENT APPLICATION

(12)

(21) Application number: 79300983.8

(22) Date of filing: 30.05.79

(51) Int. Cl.²: **A 01 N 9/24**
//C07C53/06, C07C53/10,
C07C53/24, C07C57/04

(30) Priority: 06.06.78 GB 2639778

(43) Date of publication of application:
12.12.79 Bulletin 79/25

(84) Designated Contracting States:
DE FR GB IT SE

(71) Applicant: BP Chemicals Limited
Britannic House Moor Lane
London, EC2Y 9BU(GB)

(72) Inventor: Berry, David
BP Chemicals Limited Saltend Hedon
Hull North Humberside, HU12 8DS(GB)

(74) Representative: Harry, John et al,
BP TRADING LIMITED Patents & Licensing Division
Chertsey Road
Sunbury-on-Thames Middlesex TW16 7LN(GB)

(54) Fungicidal compositions of low phytotoxicity containing cuprammonium carboxylates and metal carboxylates.

(57) The present invention relates to a water-based fungicidal composition of low phytotoxicity containing cuprammonium complexes of carboxylic acids and an alkaline earth metal, zinc or manganese carboxylates. The compositions are useful for protection of crops such as vines, coffee, tea, tobacco, peanuts, potatoes, apples, pears, cereals and hops against fungal infections due to their low phytotoxicity. In addition they may be used as a wood preservative, to sterilise fungus infected walls and masonry, as a paint biocide, to prevent mildew on fabrics and to counteract growth of algae and marine fouling. Because they are water based they are relatively easy to handle and free from fire-hazards and environmental problems associated with fungicides based on organic solvents.

EP 0 005 991 A2

Croydon Printing Company Ltd.

1

# FUNGICIDAL COMPOSITIONS OF LOW PHYTOTOXICITY CONTAINING CUPRAMMONIUM CARBOXYLATES AND METAL CARBOXYLATES

The present invention relates to fungicidal compositions of low phytotoxicity containing cuprammonium complexes of carboxylic acids and alkaline earth metal, zinc or manganese carboxylates.

Fungicidal compositions containing both organic and inorganic compounds are well known.

Amongst the organic fungicides the most widely used, especially as wood preservatives, are tributyl tin oxide, pentachlorophenol and pentachlorophenol laurate. These are mainly used as solutions in organic solvents and therefore suffer from several disadvantages. Firstly, they are environmentally suspect and indeed some are being withdrawn for this reason. Secondly, they need organic solvents as a medium during use. The solvents have undesirable features such as added cost, toxicity to the operatives handling the compositions, environmental pollution, phytotoxicity, and fire hazard all of which are due to the evaporation of solvents from the treated substrate. In addition, in the case of some inflammable solvents, there is a risk of fire even during storage.

The inorganic fungicides are used to a greater extent and include copper/chromium compounds often combined with arsenic. The arsenic containing compounds are again unpopular on environmental grounds and are clearly unsuitable for treating plants against fungal infection in view of their known toxicity. Of the copper compounds copper naphthenate needs organic solvents as a medium and is therefore unsuitable for reasons stated above. Other copper compounds which are water based are known to be fungicidal. For example, "Bordeaux Mixture", which is a suspension of a light blue gelatinous precipitate formed

The monocarboxylic acid moieties in the cuprammonium complexes and in the alkaline earth-metal, zinc or manganese carboxylates may be the same or different and may be derived from saturated or unsaturated monocarboxylic acids. Examples of such acids include formic acid, acetic acid, propionic acid, the isomeric butyric acids, acrylic acid and methacrylic acid.

The compositions of the present invention are relatively non-phytotoxic and therefore find several uses especially as fungical compositions for the protection of substrates which may be crops such as vines, coffee, tea, tobacco, peanuts, potatoes, apples, pears, cereals and hops against fungal diseases caused for example, by Botrytis fabae, Plasmopara viticola, Phytophthora infestans and Exobasidium vexans. In addition they may be used for example, as paint biocides, as wood preservatives, particularly for pretreatment of fresh timber, seedboxes and pallets and for wood boring insect eradication, for masonry or fungus infected interior walls sterilisation, in damp proof and fire retardant compositions, as fungicides to prevent mildew on fabrics and to counteract growth of algae and marine fouling. Particularly, these compositions inhibit the growth of fungi such as Cladosporium herbarum which are responsible for the spoilage of paints, and Coniophora cerebella which causes wood decay.

For any of the above uses, the compositions may be used as a water-based suspension or as an aqueous solution. A water-based suspension is preferred if the compositions are used as a paint biocide. The aqueous solution may however contain other conventional additives capable of supplementing their activity such as free formic acid, propionic acid, formalin and bisulphites. The aqueous solutions may additionally contain wetting, spreading or sticking agents or may be emulsified with mineral oils where necessary. These agents, particularly when used for crop protection, are preferably of the anionic or non-ionic type.

The amount of the alkaline earth metal, zinc or manganese carboxylate used may vary between 0.5 and 10.0% by weight of the total composition. The presence of the calcium carboxylate appears to suppress the phytotoxicity of the complex to a surprising extent.

by volume of water per part of the composition. The diluted composition is then applied to the crop in an amount of 10 to 1000 litre per hectare to give a copper concentration in solution applied of about 0.1 kg/hectare to 0.001 kg/hectare.

The invention is further illustrated with reference to the following Examples.

EXAMPLES

## A. PREPARATION OF COMPLEXES

### Cuprammonium Propionate Complex

1. A 70% aqueous solution of ammonium dipropionate (212 g) was added to cupric oxide (30 g), and the mixture heated under reflux for 30 minutes. After cooling 88 g of aqueous ammonia (33.3% w/w $NH_3$) was added, and the mixture filtered to give a dark blue solution containing 13.5% w/w $NH_3$, 39.8% w/w propionate, 7.0% w/w copper, and 39.7% w/w water (pH = 8.0).

2. A 70% aqueous solution of ammonium dipropionate (106 g) was added to cupric oxide (30 g), and the mixture heated under reflux for 30 minutes. After cooling 44 g of aqueous ammonia (33.3% $NH_3$) was added, the solution recooled, and filtered to remove unreacted cupric oxide (6.6 g). The final solution contained 13.0% w/w $NH_3$ 38.2% w/w propionate, 10% w/w copper, and 38.8% w/w water (pH = 8.0).

3. A 70% aqueous solution of ammonium dipropionate (212 g) was added to 30 g of cuprous oxide and heated under reflux for 1 hour. After cooling, 88 g of aqueous ammonia (33.3%) was added, the solution cooled, and filtered to remove excess copper metal (12 g). The final solution contained 14.0% w/w $NH_3$. 41.3% w/w propionate, 5.0% w/w copper, and 39.7% w/w water (pH = 7.6).

4. To 25.8 g of copper propionate was added with caution a 70% aqueous solution of ammonium dipropionate (6.2 g), 19 g of aqueous ammonia (33.3% $NH_3$) and 49 g water. The solution was cooled, and filtered to give a solution containing 7.0% w/w $NH_3$, 21.8% w/w propionate, 7.5% copper, and 63.7% water (pH = 7.9).

### Cuprammonium Formate Complex

5. This complex was prepared by reacting cupric oxide with aqueous ammonia and 70% aqueous ammonium diformate. The final solution

| Tests | Composition | Cu Level kg/Ha | Test Plant | | | Average | Overall Average |
|---|---|---|---|---|---|---|---|
| | | | Tomato | Bean | Sugar Beet | | |
| Comparative (not according to the invention) | Cuprammonium Propionate | 4 | 5 | 5 | 2 | 4.0 | ) |
| | " " | 2 | 4 | 1 | 1 | 1.5 | ) 2.3 |
| | " " | 1.0 | 3 | 2 | 1 | 1.5 | ) |
| | " " | 0.5 | 2 | 1 | 0 | 1.0 | ) |
| According to the invention | Cuprammonium/Calcium Propionate | 4 | 5 | 4 | 2 | 3.7 | ) |
| | " " | 2 | 2 | 2 | 1 | 1.7 | ) 1.8 |
| | " " | 1.0 | 1 | 2 | 1 | 1.3 | ) |
| | " " | 0.5 | 0 | 1 | 1 | 0.7 | ) |

Phytotoxic Damage Rating Scale

| | | |
|---|---|---|
| 0 | = | No Effect |
| 1 - 3 | = | Slight Damage |
| 4 - 6 | = | Moderate Damage |
| 7 - 9 | = | Severe Damage |
| 10 | = | Plant Dead |

3.   The same composition was also tested for fungicidal activity by immersion of filter papers into serial dilutions (using 2N aqueous ammonia) of various copper salts including calcium-free cuprammonium propionate. After drying, the filter papers were sprayed with a suspension of Botrytis fabae and incubated. The filter papers were then assessed for fungal growth. The following limits of copper were found at or above which growth was inhibited.

| | Toxic Limit ppm Cu |
|---|---|
| Cuprammonium Propionate | 15 |
| Cuprammonium Sulphate | 10 |
| Cuprammonium/Calcium Propionate | 1 |

The above tests shown clearly that the compositions of the present invention are not only less phyto-toxic but also possess very high activity.

4.   An assessment was also made of the effect of the composition on mycelial growth of two plant pathogens (Alternaria Porri and Botrytis Fabae). The test involved incorporation of a range of concentrations of the composition in an agar medium (1-25 ppm Cu) which was the inoculated with a plug of mycelium from the plant pathogens. An assessment was then made of the extent of mycelial growth obtained at each concentration. A comparative test with copper sulphate was also conducted. The following inhibitions of growth was obtained.

| | Organism | ppm Cu | % Inhibition of Mycelial Growth | |
|---|---|---|---|---|
| | | | Cuprammonium/Calcium Propionate | Copper Sulphate |
| (a) | Porri | 25 | 46 | 5 |
| | | 10 | 20 | 4 |
| | | 5 | 12 | Nil |
| | | 1 | Nil | 2 |
| (b) | Fabae | 25 | 31 | 8 |
| | | 10 | 26 | 7 |
| | | 5 | 24 | 7 |
| | | 1 | 4 | Nil |

| Fungus | % Cu content of treating solution | Copper ammonium propionate | | Copper ammonium propionate + calcium propionate | |
|---|---|---|---|---|---|
| | | loading | weight loss | loading | weight loss |
| Coniophora puteana | 1.0 | 8.45 | 10.2 | 8.59 | 3.3 |
| | 0.63 | 5.12 | 18.8 | 5.14 | 3.4 |
| | 0.40 | 3.43 | 32.0 | 3.32 | 23.2 |
| | 0.25 | 2.15 | 47.1 | 2.19 | 30.0 |
| | 0.16 | 1.29 | 47.1 | 1.35 | 35.2 |
| | 0.10 | 0.85 | 51.2 | 0.82 | 52.2 |
| | 0.063 | 0.51 | 50.0 | 0.53 | 47.2 |
| | 0 | 0 | 48.4 | 0 | 48.4 |
| Poria placenta | 1.6 | 13.0 | 8.6 | 12.9 | 3.4 |
| | 1.0 | 8.16 | 9.6 | 8.53 | 6.9 |
| | 0.63 | 5.07 | 14.5 | 5.05 | 13.1 |
| | 0.40 | 3.20 | 16.5 | 3.35 | 15.2 |
| | 0.25 | 2.07 | 16.8 | 2.04 | 16.9 |
| | 0.16 | 1.28 | 14.0 | 1.35 | 10.8 |
| | 0.10 | 0.84 | 14.0 | 0.79 | 7.0 |
| | 0 | 0 | 17.6 | 0 | 17.6 |
| Gloeophyllum trabeum | 1.0 | 8.39 | 3.8 | 8.75 | 0 |
| | 0.63 | 5.19 | 2.0 | 5.38 | 0 |
| | 0.40 | 3.27 | 1.2 | 3.37 | 0 |
| | 0.25 | 2.12 | 0 | 2.16 | 1.3 |
| | 0.16 | 1.30 | 0 | 1.38 | 0.5 |
| | 0.10 | 0.84 | 4.3 | 0.83 | 3.1 |
| | 0.063 | 0.50 | 3.1 | 0.52 | 3.0 |
| | 0 | 0 | 26.4 | 0 | 26.4 |
| Coriolus versicolor | 1.6 | 11.6 | 9.5 | 11.0 | 2.5 |
| | 1.0 | 6.91 | 11.8 | 6.78 | 5.0 |
| | 0.63 | 4.33 | 3.5 | 4.49 | 7.8 |
| | 0.40 | 2.73 | 3.0 | 2.82 | 1.7 |
| | 0.25 | 1.90 | 9.4 | 2.01 | 2.0 |
| | 0.16 | 1.15 | 10.2 | 1.20 | 5.9 |
| | 0.10 | 0.73 | 6.1 | 0.69 | 1.4 |
| | 0 | 0 | 23.1 | 0 | 23.1 |